# EUROPEAN PATENT SPECIFICATION

(11) **EP 4 372 496 B1**
(45) Date of publication and mention of the grant of the patent: **28.10.2026**
(21) Application number: 22841732.5
(22) Date of filing: 25.03.2022
(51) Int. Cl.: G05B 19/05, G06F 3/0481, G05B 19/042

(54) **OPERATION DISPLAY SYSTEM, INFORMATION PROCESSING METHOD, AND INFORMATION PROCESSING PROGRAM**
BETRIEBSANZEIGESYSTEM, INFORMATIONSVERARBEITUNGSVERFAHREN UND INFORMATIONSVERARBEITUNGSPROGRAMM
SYSTÈME D'AFFICHAGE D'OPÉRATION, PROCÉDÉ DE TRAITEMENT D'INFORMATIONS ET PROGRAMME DE TRAITEMENT D'INFORMATIONS

(30) Priority: 12.07.2021 JP 2021115279
(43) Date of publication of application: 22.05.2024
(73) Proprietor: OMRON Corporation, Kyoto 600-8530 (JP)
(72) Inventor: NAGATA, Yuta, Kyoto-shi, Kyoto 600-8530 (JP)
(74) Representative: Mewburn Ellis LLP
(86) International application number: PCT/JP2022/014420
(87) International publication number: WO 2023/286382

(56) References cited:
- EP-A1- 3 200 057
- WO-A1-2012/086049
- JP-A- 2012 504 291
- JP-A- 2021 039 568
- JP-A- 2021 039 568

## Description

### TECHNICAL FIELD

The present invention relates to assistance for a user operation in a control system for controlling a control object.

### BACKGROUND ART

At various production sites, a user operation is provided to a control device through a device called a human machine interface (HMI), and various types of information is provided to the user through the HMI.

For example, National Patent Publication No. 2016-506559 (PTL 1) discloses a method for changing an object to be used in a display screen of an HMI device.

EP3200057A1 discloses methods, systems and computer program products for providing a short cut link in a graphical user interface, GUI, of an electronic device for skipping at least one of multiple GUI screens.

JP2021039568A discloses an information processing system connected to a control device for controlling a control object that includes a user interface and collection means.

### CITATION LIST

### PATENT LITERATURE

PTL 1: National Patent Publication No. 2016-506559

### SUMMARY OF INVENTION

### TECHNICAL PROBLEM

A user interface screen displayed on the HMI is designed in consideration of a manufacturing facility and work. However, improvements are being made at the production site on a daily basis, and therefore there is a need to flexibly modify or change the user interface screen in accordance with such improvements.

It is one object of the present invention to provide a mechanism by which a user interface screen can be flexibly added so as to be adaptive to a user operation.

### SOLUTION TO PROBLEM

According to a first aspect of the present invention, there is provided an operation display system as specified in claim 1. According to this configuration, when the user performs one or more operations on the one or more first operation objects, the one or more second operation objects each for instructing the same processing are respectively generated for the one or more operations each matching with the predetermined rule among the performed operations. Each of the one or more second operation objects thus generated correspond to a substantial content of an operation performed by the user, thereby implementing a user interface screen allowing for an efficient operation.

The generation unit may extract an operation for outputting an instruction for controlling the control target, among the contents of the operations included in the operation history. According to this configuration, only the operation for substantially controlling the control target can be efficiently extracted.

The generation unit may exclude a user operation for page transition among the contents of the operations included in the operation history. According to this configuration, the user operation for the page transition for the purpose of displaying on the display unit is not relevant to the operation for controlling the control target, and by excluding such an operation, substantially only a necessary operation can be extracted.

In the first aspect of the present invention, the generation unit comprises a filtering unit configured to exclude at least one of an alarm viewer checking operation, a trouble shooting information display operation, and a manual display operation among the contents of the operations included in the operation history. According to this configuration, only an operation for substantially controlling the control target can be efficiently extracted by excluding the operation of making reference to information for the user to perform an operation.

The generation unit may generate a new page including the one or more second operation objects. According to this configuration, since the one or more generated second operation objects can be collected in the new page, the operation can be efficient.

The display unit may display a page that does not include an operation object other than the one or more second operation objects. According to this configuration, since only one or more second operation objects are displayed, the operation can be more efficient.

Each of the one or more second operation objects may be a copy of a corresponding first operation object. According to this configuration, since the second operation object is independent of the first operation object, the second operation object can be edited or the like.

Each of the one or more second operation objects may include an instruction for accessing a corresponding first operation object. According to this configuration, since the second operation object can be substantially integrated with the first operation object, even when the first operation object is changed or the like, the changed content can be automatically reflected in the second operation object.

The acquisition unit may start acquiring the operation history in response to receiving a predetermined specific user operation. According to this configuration, since the acquisition of the operation history can be started by an explicit user operation, a second operation object corresponding to a user operation within an intended period can be generated.

According to a second aspect of the present invention, there is provided an information processing method as specified in claim 9.

According to a third aspect of the present invention, there is provided an information processing program as specified in claim 12.

### ADVANTAGEOUS EFFECTS OF INVENTION

According to the present invention, a user interface screen can be flexibly added so as to be adaptive to a user operation.

### BRIEF DESCRIPTION OF DRAWINGS

Fig. 1 is a schematic diagram showing a main part of a control system according to the present embodiment.
Fig. 2 is a schematic diagram showing an overall configuration example of the control system according to the present embodiment.
Fig. 3 is a block diagram showing a hardware configuration example of an HMI of the control system according to the present embodiment.
Fig. 4 is a block diagram showing a hardware configuration example of a PLC of the control system according to the present embodiment.
Fig. 5 is a schematic diagram showing an example of interaction between the HMI and the PLC in the control system according to the present embodiment.
Fig. 6 is a diagram for illustrating an example of a user operation in the control system according to the present embodiment.
Fig. 7 is a diagram showing an example of a page for shortcut generation processing of the control system according to the present embodiment.
Fig. 8 is a diagram for illustrating a processing procedure example for the shortcut generation processing of the control system according to the present embodiment.
Fig. 9 is a diagram for illustrating a processing procedure example for the shortcut generation processing of the control system according to the present embodiment.
Fig. 10 is a schematic diagram showing a functional configuration for implementing the shortcut generation processing of the control system according to the present embodiment.
Fig. 11 is a diagram for illustrating an example of filtering in the shortcut generation processing of the control system according to the present embodiment.
Fig. 12 is a flowchart showing a processing procedure for the shortcut generation processing of the control system according to the present embodiment.
Fig. 13 is a diagram for illustrating an example of a shortcut object generated by the control system according to the present embodiment.

### DESCRIPTION OF EMBODIMENTS

With reference to the drawings, an embodiment of the present invention will be described in detail. The same or equivalent part in the drawings is denoted by the same reference numeral, and the description will not be repeated.

### <A. Application Example>

An example of a scene to which the present invention is applied will be described.

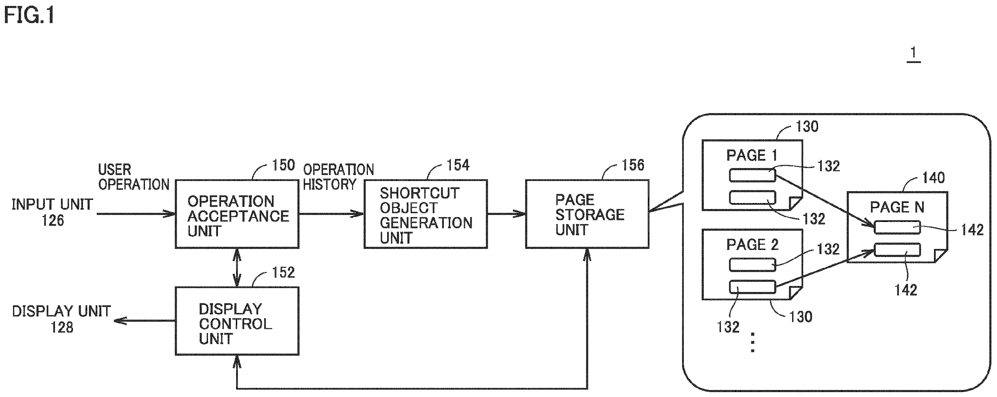

Fig. 1 is a schematic diagram showing a main part of a control system 1 according to the present embodiment. Referring to Fig. 1, control system 1 for controlling a control target includes an operation display system.

As a configuration regarding the operation display system, control system 1 includes an input unit 126 that receives a user operation, a display unit 128, an operation acceptance unit 150, a display control unit 152, a shortcut object generation unit 154, and a page storage unit 156.

Display control unit 152 controls display unit 128 to display a selected page of one or more pages 130 prepared in advance. Here, each of one or more pages 130 is a unit based on which a user interface screen is provided, and includes one or more operation objects 132 (first operation objects) each for instructing predetermined processing.

Operation acceptance unit 150 acquires an operation history including one or more contents of one or more operations on one or more operation objects 132.

Shortcut object generation unit 154 extracts one or more operations each matching with a predetermined rule in the acquired operation history, and generates, based on the extracted one or more operations, one or more shortcut objects 142 (second operation objects) each for instructing the same processing as processing of a corresponding one of one or more operation objects 132 (first operation objects) operated by a user.

Page storage unit 156 stores a page 140 including shortcut objects 142 in addition to page 130 including operation objects 132.

Thus, control system 1 according to the present embodiment can flexibly generate one or more shortcut objects 142 corresponding to one or more operation objects 132 in accordance with any selection of the user. Thus, according to the present embodiment, a user interface screen can be flexibly added so as to be adaptive to a user operation.

### <B. Overall Configuration Example of Control System 1>

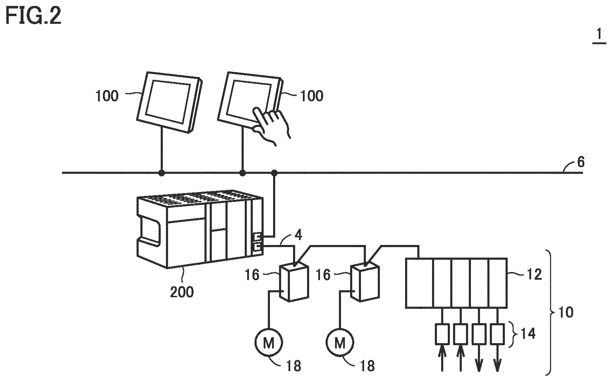

Fig. 2 is a schematic diagram showing an overall configuration example of control system 1 according to the present embodiment. Referring to Fig. 2, control system 1 may control an entire factory or may control a specific manufacturing facility or manufacturing device installed in the factory. Thus, control system 1 is configured to control any control target.

As main components, each control system 1 includes one or more HMIs 100, and a PLC (Programmable Logic Controller) 200 serving as a representative example of a control device that controls a control target.

HMI 100 constitutes at least a part of the operation display system according to the present embodiment. That is, the operation display system according to the present embodiment may be implemented by only HMI 100, may be implemented by a plurality of HMIs 100, or may be implemented by HMI 100 and another processing entity.

As used herein, the term "operation display system" encompasses any device including a function of presenting information to a user and a function of receiving an operation from the user.

In the example of Fig. 2, HMI 100 and PLC 200 are connected to each other through an information system network 6. A general-purpose communication protocol such as Ethernet (registered trademark) may be adopted as information system network 6.

HMI 100 receives an operation from the user, provides PLC 200 with an instruction corresponding to the operation, and graphically displays various types of information from PLC 200.

PLC 200 is also connected to a field device group 10. Field device group 10 includes any device required for controlling the control target. More specifically, field device group 10 includes a device that exchanges information with the control target (for example, a manufacturing facility, a manufacturing device, or a sensor and an actuator included in the manufacturing facility or the manufacturing device). In the example of Fig. 2, field device group 10 includes a remote input and output (I/O) device 12, a relay group 14, a servo driver 16, and a servo motor 18.

PLC 200 acquires information from field device group 10 and executes control arithmetic operation according to a previously-produced user program, thereby generating information to be provided to field device group 10. Hereinafter, the information acquired by PLC 200 from field device group 10 is also referred to as "input data", and the information to be provided to field device group 10 is also referred to as "output data".

In the example of Fig. 2, PLC 200 and field device group 10 are connected to each other through a control system network 4. An industrial communication protocol is preferably adopted as control system network 4. EtherCAT (registered trademark), EtherNet/IP (registered trademark), DeviceNet (registered trademark), CompoNet (registered trademark), and the like are known as such a communication protocol.

It should be noted that the connection is not limited to being made through control system network 4 and may be made through a hard wire.

### <C. Hardware Configurations>

Examples of hardware configurations of devices included in control system 1 of the present embodiment will be described below.

### (c1: HMI 100)

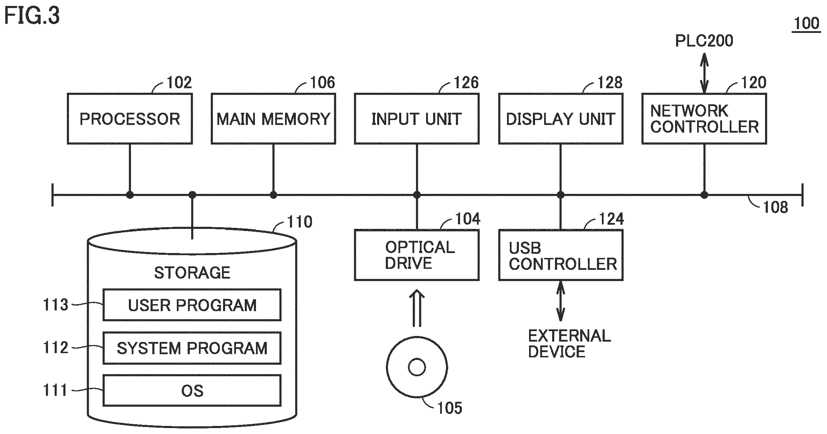

Fig. 3 is a block diagram showing a hardware configuration example of HMI 100 of control system 1 according to the present embodiment. With reference to Fig. 3, HMI 100 includes a processor 102 such as a central processing unit (CPU) or a micro-processing unit (MPU), an optical drive 104, a main memory 106, a storage 110, a network controller 120, a universal serial bus (USB) controller 124, an input unit 126, and a display unit 128. These components are connected together through a bus 108.

Processor 102 reads various programs stored in storage 110, loads the programs in main memory 106, and executes the programs, thereby implementing required processing in HMI 100.

For example, storage 110 includes a hard disk drive (HDD) or a flash solid state drive (SSD). Typically, an operating system (OS) 111, a system program 112 for implementing basic processing, and a user program 113 produced previously according to the control target are stored in storage 110. Required programs other than the programs in Fig. 3 may be stored in storage 110.

HMI 100 may have optical drive 104. Optical drive 104 reads a computer-readable program from a recording medium 105 (for example, an optical recording medium such as a digital versatile disc (DVD)) that non-transiently stores the program, and stores the program in storage 110 or the like.

Various programs executed by HMI 100 may be installed through computer-readable recording medium 105, or may be installed by being downloaded from any server on the network.

Network controller 120 controls the data exchange with PLC 200 and the like through information system network 6.

USB controller 124 controls the data exchange with an external device (for example, a support device) through USB connection.

Input unit 126 is configured of a touch panel, a mouse, a keyboard, and the like, and receives a user operation. Display unit 128 is configured of a display, various indicators, and the like, and outputs a processing result and the like from processor 102. It should be noted that a touch panel display may be adopted in which input unit 126 and display unit 128 are integrated.

Although the configuration example in which required processing are provided by processor 102 executing the program has been described in Fig. 3, a part or all of provided processing may be implemented using a dedicated hardware circuit (for example, an application specific integrated circuit (ASIC) and a field-programmable gate array (FPGA)).

### (c2: PLC 200)

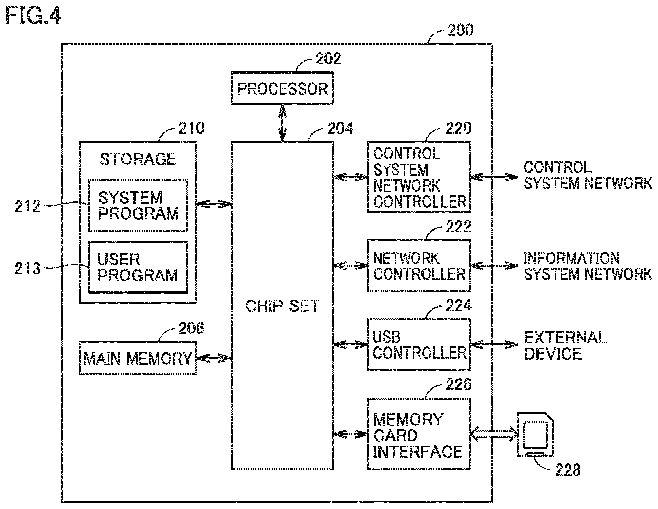

Fig. 4 is a block diagram showing a hardware configuration example of PLC 200 of control system 1 according to the present embodiment. Referring to Fig. 4, PLC 200 includes a processor 202 such as a CPU or MPU, a chipset 204, a main memory 206, a storage 210, a control system network controller 220, an information system network controller 222, a USB controller 224, and a memory card interface 226.

Processor 202 reads various programs stored in storage 210, loads the various programs in main memory 206, and executes the various programs, thereby implementing a control arithmetic operation for controlling the control target. Chip set 204 controls data transmission and the like between processor 202 and each component.

Storage 210 stores a system program 212 for implementing basic processing and a user program 213 for implementing the control arithmetic operation.

Control system network controller 220 controls data exchange with the field device group 10 through control system network 4.

Information system network controller 222 controls the data exchange with HMI 100 and the like through information system network 6.

USB controller 224 controls the data exchange with an external device (for example, a support device) through USB connection.

Memory card interface 226 is configured such that a memory card 228 is detachably attached, and memory card interface 226 can write the data in memory card 228 and read various data (user programs, trace data, and the like) from memory card 228.

Although the configuration example in which the required processing is provided by processor 202 executing the program has been illustrated in Fig. 4, some or all of these provided processing may be implemented using the dedicated hardware circuit (for example, the ASIC or the FPGA). Alternatively, the main part of PLC 200 may be implemented using hardware (for example, an industrial personal computer based on a general-purpose personal computer) according to a general-purpose architecture. In this case, a plurality of OSs having different uses may be executed in parallel using a virtualization technology, and the necessary application may be executed on each OS.

### <D. Overview of Processing>

Next, an example of processing executed by HMI 100 of control system 1 according to the present embodiment will be described.

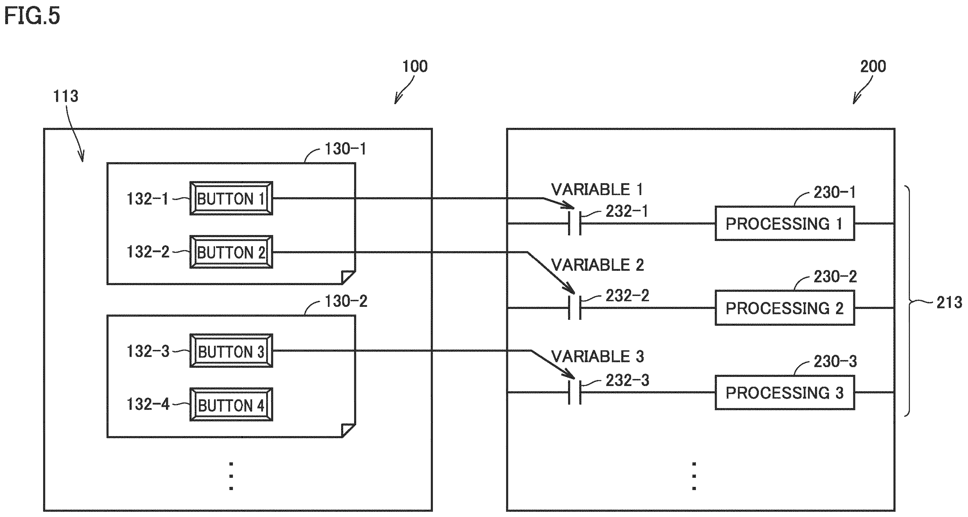

Fig. 5 is a schematic diagram showing an example of interaction between HMI 100 and PLC 200 in control system 1 according to the present embodiment. Referring to Fig. 5, HMI 100 selectively displays one or more pages 130-1, 130-2, ... (hereinafter, also collectively referred to as "page 130") in accordance with user program 113. Each of pages 130 includes one or more operation objects 132-1, 132-2, 132-3, ... (hereinafter, also collectively referred to as "operation object 132").

Each of operation objects 132 encompasses an object that accepts a user operation. Typically, in response to a user operation, operation object 132 instructs PLC 200 to perform predetermined processing. Examples of operation object 132 include: a button for instructing to turn ON or OFF in accordance with a user operation; a lever or slider for changing or updating to any value in accordance with a user operation; and the like.

User program 213 to be executed by PLC 200 includes, for example, processing execution instructions 230-1, 230-2, 230-3, ... (hereinafter, also collectively referred to as "processing execution instruction 230"). Processing execution instructions 230-1, 230-2, 230-3 are respectively associated with variables 232-1, 232-2, 232-3 (hereinafter, also collectively referred to as "variable 232") indicating execution conditions.

Each of operation objects 132 included in page 130 changes a value of a variable of PLC 200 associated therewith in advance, in accordance with the user operation. In the example shown in Fig. 5, operation object 132-1 of page 130-1 is associated with variable 232-1, operation object 132-2 of page 130-1 is associated with variable 232-2, and operation object 132-3 of page 130-2 is associated with variable 232-3.

In this way, HMI 100 selectively displays page 130 including one or more operation objects 132, accepts a user operation on displayed page 130, and provides an associated instruction to PLC 200. As an implementation of providing an instruction to PLC 200, processing of changing or updating the value of variable 232 held by PLC 200 may be adopted as described above.

Next, an example of the user operation will be described.

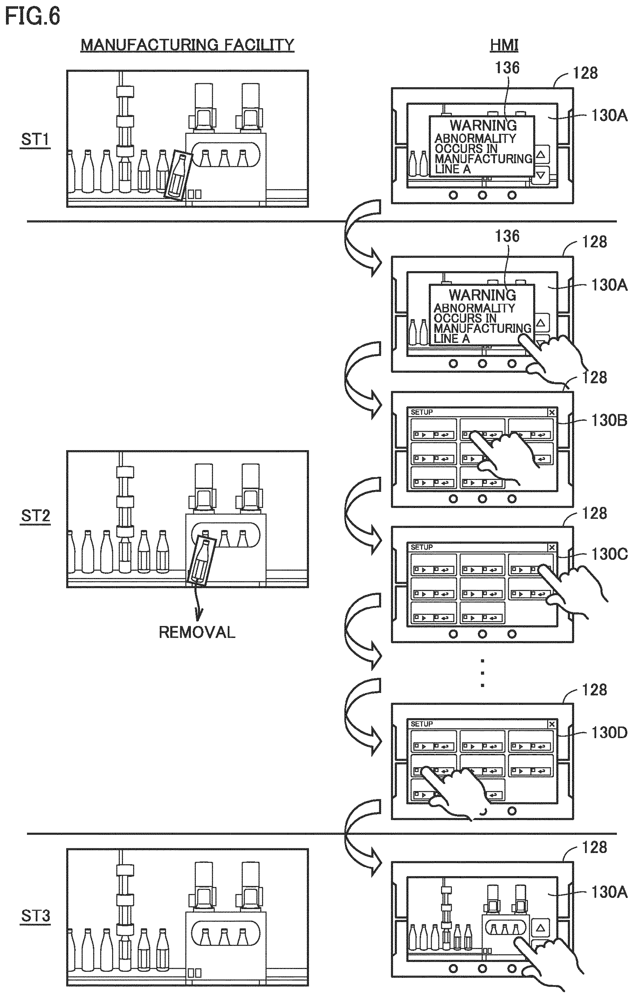

Fig. 6 is a diagram for illustrating an example of the user operation in control system 1 according to the present embodiment. Fig. 6 shows an example of a recovery sequence from occurrence of an abnormality to a normal operation in a manufacturing facility that continuously processes a workpiece.

It is assumed that an abnormality such as a jam of a workpiece has occurred in the manufacturing facility (state ST1). On this occasion, a warning message 136 is displayed on display unit 128 of HMI 100 in addition to a page 130A indicating an operation state.

The user (operator) notices the occurrence of the abnormality by warning message 136. Then, the user visually checks the manufacturing facility, and perform a procedure (in this example, removal of the workpiece) for eliminating the abnormality (state ST2).

For the procedure for eliminating the abnormality, the user selects warning message 136, performs an operation for checking the content of the warning, and then performs an operation for removing the workpiece. Examples of the operation for removing the workpiece include: releasing a safety guard for accessing the manufacturing facility; closing the safety guard after removing the workpiece; and the like. Further, after the workpiece is removed, an operation such as origin return (i.e., initialization) or abnormal state resetting is performed. Such a series of operations are performed, for example, in the following manner: pages such as page 130A, a page 130B, and a page 130C are sequentially switched and a corresponding operation object included in each page 130 is operated.

After the series of abnormalities are eliminated and the user confirms safety of the manufacturing facility, the user operates a corresponding operation object of a page 130D of HMI 100, thereby resuming the operation.

When the manufacturing facility is returned to the normal operating state (state ST3), the user makes reference to page 130A of HMI 100 to confirm that the manufacturing facility is normally operated.

In the sequence of sequentially switching the plurality of pages 130 and operating operation objects 132, an unnecessary operation or waiting time may be caused such as page transition. On the other hand, in the manufacturing facility in which various abnormalities can occur, it is difficult to determine, in the stage of device design, a sequence by which each abnormality should be overcome. Further, it is often reviewed what sequence is most efficient whenever an abnormality actually occurs.

In order to address such problems, control system 1 according to the present embodiment provides a function of collecting designated operation objects 132 in a single page 130 in response to a user operation. By collecting necessary operation objects 132 in single page 130, a more efficient operation can be implemented when a corresponding abnormality occurs, and even a user with less knowledge and less experience can perform a predetermined sequence. The processing of collecting necessary operation objects 132 in a single page 130 as provided by control system 1 according to the present embodiment is also referred to as "shortcut generation processing" for convenience of description.

### <E. Shortcut Generation Processing>

Next, an example of the shortcut generation processing performed by control system 1 according to the present embodiment will be described.

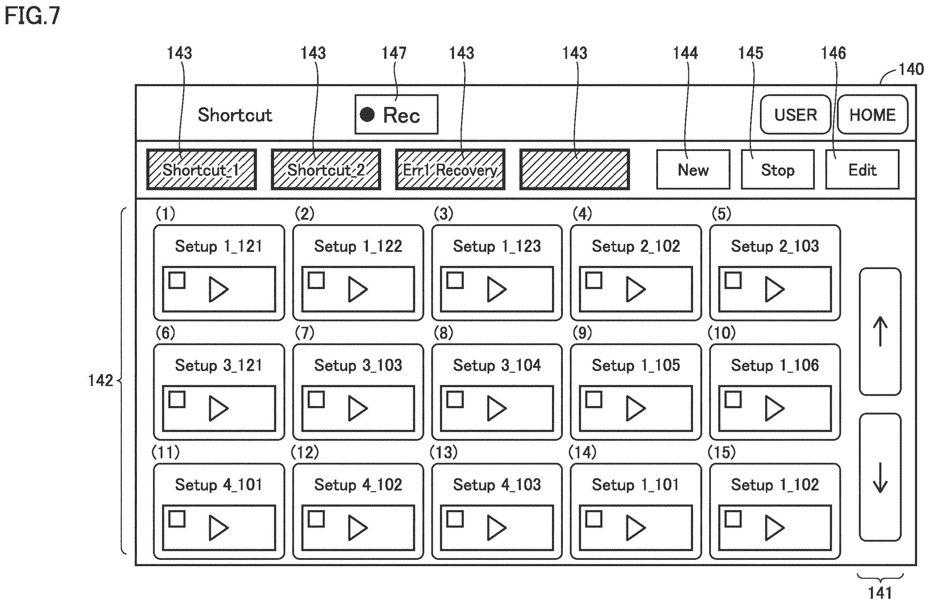

Fig. 7 is a diagram showing an example of a page 140 for the shortcut generation processing of control system 1 according to the present embodiment. Referring to Fig. 7, page 140 includes one or more shortcut objects 142 generated by the shortcut generation processing. Each of shortcut objects 142 corresponds to an operation object 132 included in a page 130. Shortcut object 142 may be a copy of a corresponding operation object 132 or may be implemented to include an instruction for accessing a corresponding operation object 132 as described later.

Thus, in the shortcut generation processing, new page 140 including one or more shortcut objects 142 may be generated. It should be noted that shortcut object 142 may be generated by being added to an existing page 130.

As shown in Fig. 7, page 140, which does not include an operation object other than one or more shortcut objects 142, may be displayed to the user. By displaying such a page 140, possibility of the user performing an unnecessary operation or the like is reduced, thus resulting in a more efficient operation.

Although page 130 including only operation objects 132 and page 140 including only shortcut objects 142 are illustrated for convenience of description, operation objects 132 and shortcut objects 142 may be both included in page 130 or page 140.

In accordance with selection of a page switching object 141, shortcut objects 142 displayed on page 140 are sequentially switched.

The content of page 140 to be displayed is switched in response to selection of one or more page selection objects 143. In the example shown in Fig. 7, a page 140 provided with a label "Shortcut_1" is displayed.

Page 140 includes an addition starting object 144 and an addition ending object 145. When addition starting object 144 is selected, recording of a shortcut object 142 (corresponding operation object 132) that should be added to selected page 140 is started. On the other hand, when addition ending object 145 is selected, recording of a shortcut object 142 (corresponding operation object 132) that should be added to selected page 140 is ended.

Page 140 includes an editing object 146 for changing, adding, or deleting shortcut object 142.

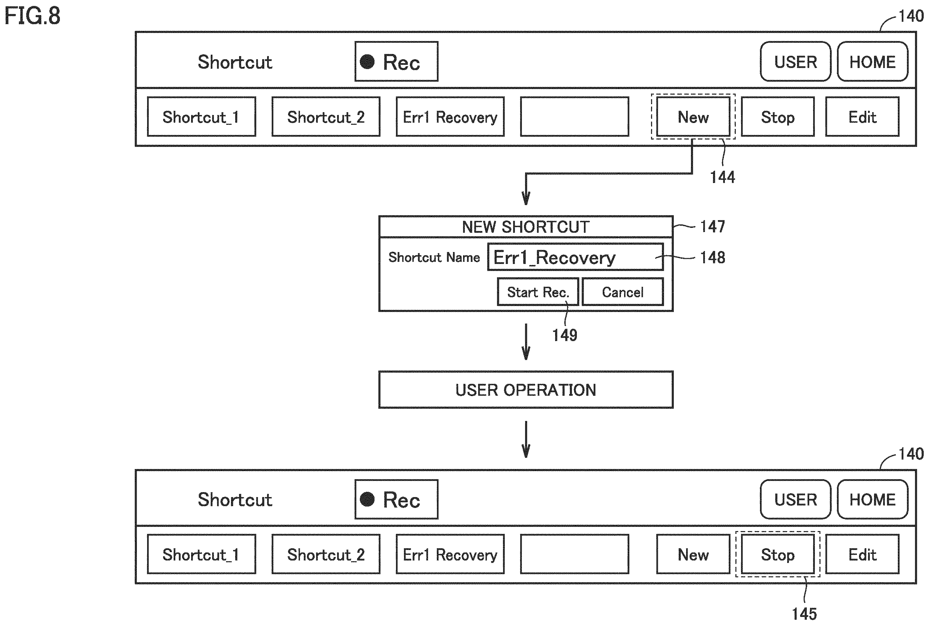

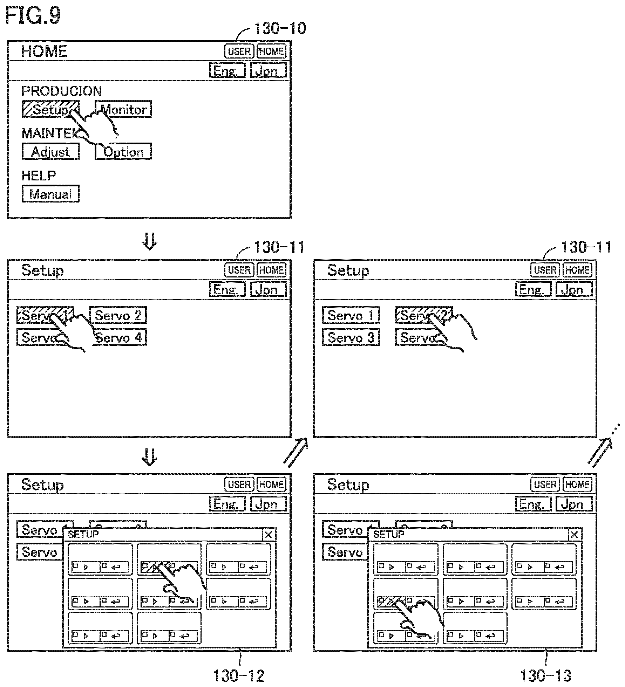

Each of Figs. 8 and 9 is a diagram for illustrating a processing procedure example for the shortcut generation processing of control system 1 according to the present embodiment.

Referring to Fig. 8, when addition starting object 144 of page 140 is selected, processing of generating (adding) a shortcut object 142 is started. In response to the selection of addition starting object 144, a dialog 147 for setting the label name of page 140 is displayed. The user inputs an intended label 148 into dialog 147 and selects a starting object 149. Then, the user performs intended operations as shown in Fig. 9.

Finally, when addition ending object 145 of page 140 is selected, page 140 including shortcut object 142 corresponding to the user operation is generated.

It should be noted that the label input to dialog 147 is set in page 140. Fig. 9 illustratively shows that the user freely inputs the label of page 140, but it is not limited thereto, and the label may be automatically determined based on the content or date and time of the abnormality having occurred.

Referring to Fig. 9, the user performs operations corresponding to shortcut objects 142 to be generated. Fig. 9 illustratively shows that an operation object included in a page 130-10 for displaying main information is selected to transition to a page 130-11, and an operation object included in page 130-11 is selected to display a page 130-12. The user selects an intended operation object in page 130-12.

It is illustratively shown that thereafter, the user returns to page 130-11, another operation object included in page 130-11 is selected, and a page 130-13 is displayed. The user selects another intended operation object in a page 130-13. As shown in Fig. 9, the user performs the series of operations.

Typically, shortcut objects 142 respectively corresponding to the operation object included in page 130-12 and the operation object included in page 130-13 are generated by the below-described processing. That is, each of the operations performed until page 130-12 is displayed after displaying page 130-10 and then page 130-11 and the operation performed until page 130-13 is displayed after displaying page 130-12 and then page 130-11 is an operation for page transition, and is not an operation for providing an instruction to PLC 200. That is, each of them do not need to be generated as shortcut object 142. Therefore, control system 1 according to the present embodiment extracts an operation matching with a predetermined rule from among the operations performed by the user, and generates a shortcut object 142 corresponding to the extracted operation.

It should be noted that each of Figs. 8 and 9 illustratively shows that shortcut objects 142 are generated by explicitly selecting addition starting object 144 and addition ending object 145 by the user; however, it is not limited thereto, and generation of a shortcut object 142 may be started when a predetermined condition is satisfied.

For example, occurrence of a certain abnormality, output of an alarm, or the like may be used as a trigger for starting, and recovery to normal operation may be used as a trigger for ending. On this occasion, during a period of time from the starting to the ending, the user performs a series of operations such as checking the content of the abnormality, eliminating the abnormality, returning to the origin (i.e., initialization), resetting an abnormal state, and confirming the normal operation, and the series of operations may be recorded and corresponding shortcut objects 142 may be generated.

Further, the series of operations as shown in Fig. 9 may be performed when making a recovery from an abnormality having occurred. However, when an abnormality actually occurs, it is normally required to make a recover from the abnormality immediately, so that the following method may be used.

For example, a simulator (for example, provided by a support device) that simulates a part or whole of control system 1 may be prepared, and the user may perform operations on the simulator to record the series of operations, thereby generating corresponding shortcut objects 142.

Alternatively, the user may operate HMI 100 to record the series of operations with an instruction from HMI 100 to PLC 200 being invalidated, thereby generating corresponding shortcut objects 142.

Alternatively, for example, when an abnormality is intentionally caused to occur and a user in charge of training teaches operations to deal with the occurred abnormality in a situation of training a user with a less experience, the series of operations performed by the user in charge of training may be recorded, thereby generating corresponding shortcut objects 142.

Alternatively, when an abnormality unexpected beforehand occurs, a series of operations for making a recovery from the abnormality may be recorded, thereby generating corresponding shortcut objects 142. In this case, by editing page 140 including generated shortcut objects 142 (the editing can be performed by selecting editing object 146 (see Fig. 7)), a shortcut object 142 corresponding to an unnecessary operation may be deleted afterward.

Further, any information may be added to page 140 including generated shortcut objects 142. Examples of the information to be added include: information indicating the content of the abnormality having occurred; the name of the user who has performed the operation when the abnormality has occurred; date and time of generation; information for specifying a workpiece for which the abnormality has occurred; environment information such as a temperature or humidity; and the like.

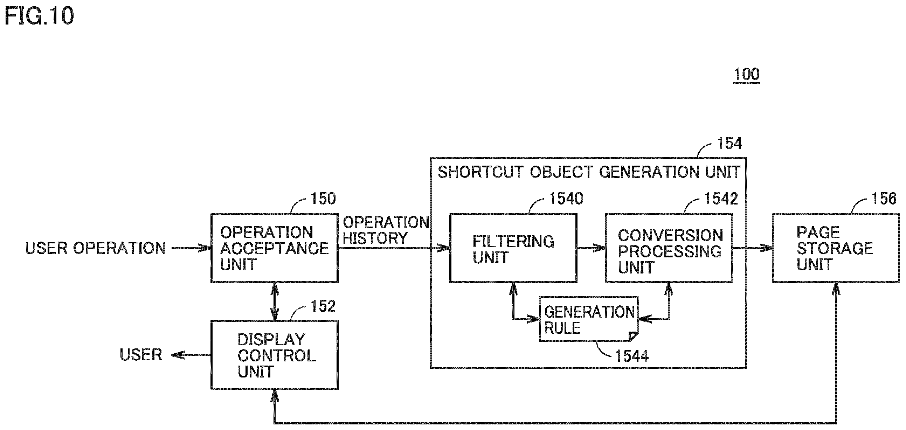

Fig. 10 is a schematic diagram showing a functional configuration for implementing the shortcut generation processing of control system 1 according to the present embodiment. Each functional configuration shown in Fig. 10 is typically implemented by executing system program 112 (Fig. 3) by processor 102 of HMI 100.

Referring to Fig. 10, HMI 100 includes operation acceptance unit 150, display control unit 152, shortcut object generation unit 154, and page storage unit 156.

Operation acceptance unit 150 accepts a user operation provided via input unit 126 or the like. Operation acceptance unit 150 outputs, to shortcut object generation unit 154, information for specifying an operation object 132 selected by the user operation, or the like. Thus, operation acceptance unit 150 acquires an operation history including one or more contents of one or more operations on one or more operation objects 132.

As described above, operation acceptance unit 150 accepts a predetermined specific user operation (selection of addition starting object 144) and starts acquiring the operation history. Further, operation acceptance unit 150 accepts a predetermined specific user operation (selection of addition ending object 145) and ends the acquisition of the operation history.

Display control unit 152 controls display unit 128 to display a selected page of one or more pages prepared in advance. More specifically, in response to the user operation, display control unit 152 selects a page stored in page storage unit 156, and controls display unit 128 to display the selected page.

Shortcut object generation unit 154 generates one or more shortcut objects 142 in response to the user operation. Shortcut object generation unit 154 stores, in page storage unit 156, information of page 140 including the generated one or more shortcut objects 142.

Here, shortcut object generation unit 154 extracts one or more operations each matching with a predetermined generation rule 1544 in the acquired operation history, and generates, based on the extracted one or more operations, one or more shortcut objects 142 (second operation objects) each for instructing the same processing as processing of a corresponding one of one or more operation objects 132 (first operation objects) operated by the user.

More specifically, shortcut object generation unit 154 includes a filtering unit 1540 and a conversion processing unit 1542.

Filtering unit 1540 makes reference to generation rule 1544 so as to only extract information for generating a shortcut object 142 among the user operations. Typically, filtering unit 1540 extracts an operation for outputting an instruction for controlling the control target, among the contents of the operations included in the operation history.

Further, filtering unit 1540 also determines whether or not a starting condition and an ending condition (starting trigger and ending trigger) for generation of shortcut object 142 are satisfied.

Conversion processing unit 1542 generates a necessary shortcut object 142 based on the information extracted by filtering unit 1540. More specifically, conversion processing unit 1542 may generate a shortcut object 142 by copying a corresponding operation object 132, or may generate a shortcut object 142 to include an instruction for accessing an intended operation object 132.

Page storage unit 156 provides a designated label to page 140 including one or more shortcut objects 142 generated by shortcut object generation unit 154 and stores it. Page 140 stored in page storage unit 156 is selectively displayed together with page 130 generated in advance, in response to a user operation.

Here, an example of generation rule 1544 will be described. In generation rule 1544, a rule for extracting an operation object 132 that should be operated is mainly set.

For example, an operation of TRUE/FALSE on a variable (bit) of PLC 200 (momentary button (driven to TRUE for only one shot)), an operation of changing the variable (bit) of PLC 200 to TRUE or FALSE, or the like is extracted as a target for generation of shortcut object 142. Each of these operations corresponds to the operation for outputting an instruction for controlling the control target.

On the other hand, since the user operation for the page transition is not an operation for providing a certain instruction to PLC 200, the user operation for the page transition may be excluded from the target for generation of shortcut object 142. That is, filtering unit 1540 excludes the user operation for the page transition among the contents of the operations included in the operation history.

Further, one or more of an alarm viewer checking operation, a trouble shooting information display operation, and a manual display operation may be excluded from the target for generation of shortcut object 142 because each of these operations is not an operation for providing a certain instruction to PLC 200. That is, filtering unit 1540 excludes at least one of the alarm viewer checking operation, the trouble shooting information display operation, and the manual display operation among the contents of the operations included in the operation history.

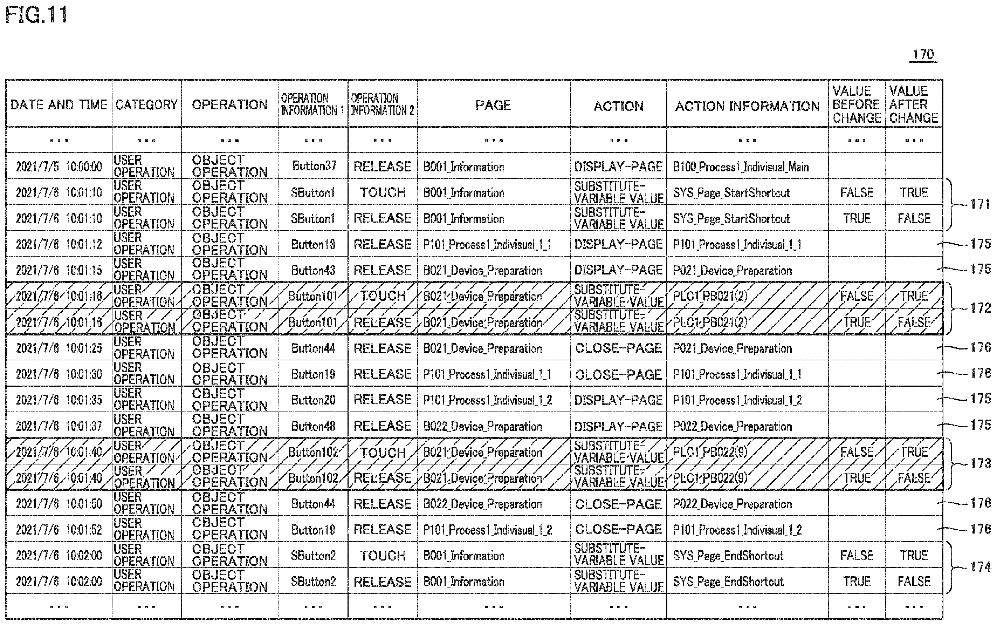

Fig. 11 is a diagram for illustrating an example of filtering in the shortcut generation processing of control system 1 according to the present embodiment. Operation history 170 shown in Fig. 11 records user operations in a time-series manner.

Operation history 170 includes: a user operation 171 indicating selection of addition starting object 144 (momentary button); and a user operation 174 indicating selection of addition ending object 145 (momentary button). One or more user operations performed during a period of time from the selection of addition starting object 144 to the selection of addition ending object 145 are target(s) for generation of shortcut object(s) 142.

Among these user operations, a user operation 172 and a user operation 173 respectively indicating selection of operation objects 132 of "Button 101" and "Button 102" (both are momentary buttons) are extracted as targets for generation of shortcut objects 142. Then, two shortcut objects 142 respectively corresponding to operation objects 132 of "Button 101" and "Button 102" are generated.

On the other hand, a user operation 175 indicating displaying of a page and a user operation 176 indicating closing of the page are excluded from the targets for generation of shortcut objects 142.

Thus, HMI 100 extracts the targets for generation of shortcut objects 142 from the user operation history in accordance with generation rule 1544. Since generation rule 1544 is adopted, an appropriate shortcut object 142 can be generated while excluding a user operation that becomes noise in generating shortcut objects 142, such as displaying or closing of a page included in the operation history.

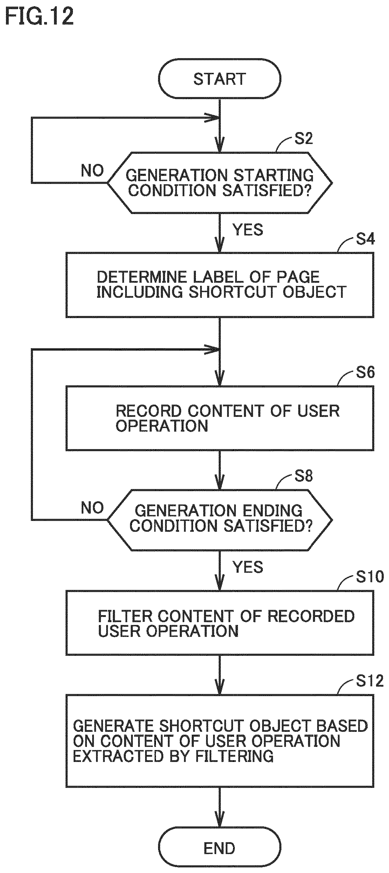

Fig. 12 is a flowchart showing a processing procedure for the shortcut generation processing of control system 1 according to the present embodiment. Each step shown in Fig. 12 is typically implemented by executing system program 112 (Fig. 3) by processor 102 of HMI 100.

Referring to Fig. 12, HMI 100 determines whether or not a generation starting condition for shortcut object 142 is satisfied (step S2). Examples of the generation starting condition for shortcut object 142 includes: selection of addition starting object 144; occurrence of a predetermined event; and the like.

When the generation starting condition for shortcut object 142 is not satisfied (NO in step S2), the processing of step S2 is repeated.

When the generation starting condition for shortcut object 142 is satisfied (YES in step S2), HMI 100 determines a label of a page including a shortcut object 142 (step S4). It should be noted that the label of the page may be determined by receiving designation of the label by the user. Then, HMI 100 records the content of the user operation (step S6). That is, HMI 100 performs processing of acquiring an operation history including the content of the operation for operation object 132.

Then, HMI 100 determines whether or not a generation ending condition for shortcut object 142 is satisfied (step S8). Examples of the generation ending condition for shortcut object 142 include: selection of addition ending object 145; predetermined recovery from an abnormality; and the like.

When the generation ending condition for shortcut object 142 is not satisfied (NO in step S8), the processing of step S6 and the subsequent steps are repeated.

When the generation ending condition for shortcut object 142 is satisfied (YES in step S8), HMI 100 filters the content of the recorded user operation (step S10), and generates a shortcut object 142 based on the content of the user operation extracted by the filtering (step S12). Then, HMI 100 stores a page including generated shortcut object 142 (step S14).

Thus, HMI 100 performs the processing of extracting one or more operations each matching with predetermined generation rule 1544 in the acquired operation history, and generating, based on the extracted one or more operations, one or more shortcut objects 142 each for instructing the same processing as processing of a corresponding one of one or more operation objects 132 operated by the user.

In the manner described above, the shortcut generation processing is ended.

### <F. Shortcut Object 142>

Next, shortcut object 142 will be described.

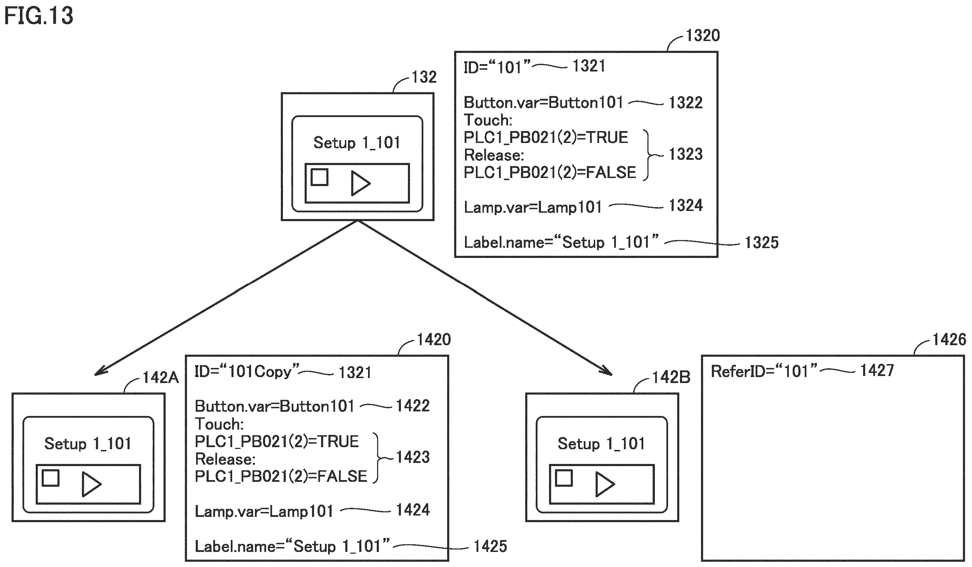

Fig. 13 is a diagram for illustrating an example of shortcut object 142 generated by control system 1 according to the present embodiment. Referring to Fig. 13, setting information 1320 associated with operation object 132 includes, for example, identification information 1321, a variable designation 1322 for a button object, an action designation 1323 set for the button object, a variable designation 1324 for changing a manner of displaying of operation object 132, and a label designation 1325 for operation object 132.

When generating a shortcut object 142A as a copy of operation object 132, setting information 1420 having the same content as the content of setting information 1320 is generated. Setting information 1420 includes, for example, identification information 1421, a variable designation 1422 for a button object, an action designation 1423 set for the button object, a variable designation 1424 for changing a manner of displaying of shortcut object 142, and a label designation 1425 of shortcut object 142.

Since shortcut object 142A as a copy of operation object 132 exists independent of operation object 132, even when a certain change is made to one object, the other object is not affected.

When generating a shortcut object 142B implemented to include an instruction for accessing operation object 132, a reference designation 1427 indicating a reference to identification information 1321 included in operation object 132 to be accessed is included as setting information 1420 of shortcut object 142B. That is, reference designation 1427 corresponds to the instruction for accessing operation object 132.

In the case of shortcut object 142B implemented to include such an instruction for accessing operation object 132, both the objects are substantially integrated and a change to an object is therefore reflected in both the objects.

It should be noted that shortcut object 142 may be an object including a single button, a composite object including a plurality of buttons, or a composite object including a button and a component other than the button.

### <G. Modification>

In the above-described embodiment, it has been illustratively described that HMI 100 mainly performs the shortcut generation processing; however, HMI 100 may perform the shortcut generation processing in cooperation with another processing entity, or the other processing entity may perform the shortcut generation processing instead of HMI 100. Conceivable examples of the other processing entity include PLC 200, the support device, an upper-level server device, and the like. Further, a whole or part of the processing may be performed using cloud computing over a network.

### <I. Advantages>

Generally, a procedure of work at a production site is highly reproducible. Since such a highly reproducible procedure of work is repeatedly performed, there is a high possibility that efficiency can be improved by preparing an appropriate operation environment.

According to control system 1 of the present embodiment, a series of operation procedures can be collected to generate a page allowing for an efficient operation. By generating such a page, it is possible to eliminate an unnecessary operation and reduce a mistake in operation.

Further, since a page including only shortcut objects (operation objects) necessary for a predetermined series of operation procedures can be presented to the user, it is not necessary to remember a complicated operation procedure including page transition, with the result that even a user with less experience can perform an appropriate operation. As a result, it is possible to reduce time and effort to train a user to such an extent that the user can perform the appropriate operation. Further, knowledge and information accumulated as know-how in the site can be standardized.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: control system; 4: control system network; 6: information system network; 10: field device group; 12: remote I/O device; 14: relay group; 16: servo driver; 18: servo motor; 100: HMI; 102, 202: processor; 104: optical drive; 105: recording medium; 106, 206: main memory; 108: bus; 110, 210: storage; 112, 212: system program; 113, 213: user program; 120: network controller; 124, 224: USB controller; 126: input unit; 128: display unit; 130, 140: page; 132: operation object; 136: warning message; 141: page switching object; 142, 142A, 142B: shortcut object; 143: page selection object; 144: addition starting object; 145: addition ending object; 146: editing object; 147: dialog; 148: label; 149: starting object; 150: operation acceptance unit; 152: display control unit; 154: shortcut object generation unit; 156: page storage unit; 170: operation history; 171, 172, 173, 174, 175, 176: user operation; 200: PLC; 204: chip set; 220: control system network controller; 222: information system network controller; 226: memory card interface; 228: memory card; 230: processing execution instruction; 232: variable; 1320, 1420: setting information; 1321, 1421: identification information; 1322, 1324, 1422, 1424: variable designation; 1323, 1423: action designation; 1325, 1425: label designation; 1427: reference designation; 1540: filtering unit; 1542: conversion processing unit; 1544: generation rule; ST1, ST2, ST3: state.

## Claims

1. An operation display system (100) that constitutes at least a part of a control system (1) for controlling a control target, the operation display system (100) comprising:
a display unit (128);
an input unit (126) configured to receive a user operation;
a control unit (152) configured to control the display unit to display a selected page of one or more pages (130) prepared in advance, each of the pages including one or more first operation objects (132) each for instructing predetermined processing;
an acquisition unit (150) configured to acquire an operation history (170) including one or more contents of one or more operations on the one or more first operation objects; and
a generation unit (154) configured to extract one or more operations each matching with a predetermined rule in the acquired operation history and generate, based on the extracted one or more operations, one or more second operation objects (142) each for instructing the same processing as processing of a corresponding one of the one or more first operation objects operated by a user, the system being **characterized in that**:
the generation unit comprises a filtering unit (1540) configured to exclude at least one of an alarm viewer checking operation, a troubleshooting information display operation, and a manual display operation among the contents of the operations included in the acquired operation history.

2. The operation display system according to claim 1, wherein the generation unit is configured to extract an operation for outputting an instruction for controlling the control target, among the contents of the operations included in the operation history.

3. The operation display system according to claim 1 or 2, wherein the generation unit is configured to exclude a user operation for page transition among the contents of the operations included in the operation history.

4. The operation display system according to any one of claims 1 to 3, wherein the generation unit is configured to generate a new page (140) including the one or more second operation objects.

5. The operation display system according to any one of claims 1 to 4, wherein the display unit is configured to display a page that does not include an operation object other than the one or more second operation objects.

6. The operation display system according to any one of claims 1 to 5, wherein each of the one or more second operation objects (142A) is a copy of a corresponding first operation object.

7. The operation display system according to any one of claims 1 to 5, wherein each of the one or more second operation objects (142B) includes an instruction for accessing a corresponding first operation object.

8. The operation display system according to any one of claims 1 to 7, wherein the acquisition unit is configured to start acquiring the operation history in response to receiving a predetermined specific user operation (144).

9. An information processing method in a control system (1) for controlling a control target, the information processing method comprising:
controlling a display unit (128) to display a selected page of one or more pages (130) prepared in advance, each of the pages including one or more first operation objects (132) each for instructing predetermined processing;
acquiring (S6, S8) an operation history (170) including one or more contents of one or more operations on the one or more first operation objects;
extracting (S10) one or more operations each matching with a predetermined rule in the acquired operation history; and
generating (S12), based on the extracted one or more operations, one or more second operation objects (142) each for instructing the same processing as processing of a corresponding one of the one or more first operation objects operated by a user, the method being **characterized in that** it further comprises:
the extracting the one or more operations comprises excluding at least one of an alarm viewer checking operation, a troubleshooting information display operation, and a manual display operation among the contents of the operations included in the acquired operation history.

10. The information processing method according to claim 9, wherein the extracting the one or more operations further comprises extracting an operation for outputting an instruction for controlling the control target, among the contents of the operations included in the operation history.

11. The information processing method according to claim 9 or 10, wherein the extracting the one or more operations further comprises excluding a user operation for page transition among the contents of the operations included in the operation history.

12. An information processing program (112) to be executed by a computer (100) that constitutes at least a part of a control system (1) for controlling a control target, the information processing program causing the computer to perform:
controlling a display unit (128) to display a selected page of one or more pages (130) prepared in advance, each of the pages including one or more first operation objects (132) each for instructing predetermined processing;
acquiring (S6, S8) an operation history (170) including one or more contents of one or more operations on the one or more first operation objects;
extracting (S10) one or more operations each matching with a predetermined rule in the acquired operation history; and
generating (S12), based on the extracted one or more operations, one or more second operation objects (142) each for instructing the same processing as processing of a corresponding one of the one or more first operation objects operated by a user,
the program being **characterized in that** it causes the computer to further perform:
the extracting the one or more operations comprises excluding at least one of an alarm viewer checking operation, a troubleshooting information display operation, and a manual display operation among the contents of the operations included in the acquired operation history.

13. The information processing program according to claim 12, wherein the extracting the one or more operations further comprises extracting an operation for outputting an instruction for controlling the control target, among the contents of the operations included in the operation history.

14. The information processing program according to claim 12 or 13, wherein the extracting the one or more operations further comprises excluding a user operation for page transition among the contents of the operations included in the operation history.

## Patentansprüche

1. Operationsanzeigesystem (100), das zumindest einen Teil eines Steuersystems (1) zum Steuern eines Steuerziels bildet, wobei das Operationsanzeigesystem (100) Folgendes umfasst:
eine Anzeigeeinheit (128);
eine Eingangseinheit (126), die dazu ausgelegt ist, einen Benutzeroperation zu empfangen;
eine Steuereinheit (152), die dazu ausgelegt ist, um die Anzeigeeinheit zu steuern, sodass diese eine ausgewählte Seite aus einer oder mehreren Seiten (130), die vorab erstellt wurden, anzeigt, wobei jede aus den Seiten ein oder mehrere Operationsobjekte (132) umfasst, die jeweils dem Anweisen einer vorbestimmten Verarbeitung dienen;
eine Erfassungseinheit (150), die dazu ausgelegt ist, eine Operationshistorie (170) zu erfassen, die ein oder mehrere Inhalte aus einer oder mehreren Operationen an dem einen oder den mehreren ersten Operationsobjekten umfasst; und
eine Erzeugungseinheit (154), die dazu ausgelegt ist, eine oder mehrere Operationen, die jeweils mit einer vorbestimmten Regel in der erfassten Operationshistorie übereinstimmen, zu extrahieren und basierend auf der/den extrahierten einen oder mehreren Operationen ein oder mehrere zweite Operationsobjekte (142) zu erzeugen, die jeweils dem Anweisen der gleichen Verarbeitung wie die Verarbeitung eines entsprechenden aus dem einen oder den mehreren ersten Operationsobjekten dienen, wobei das System **dadurch gekennzeichnet ist, dass**:
die Erzeugungseinheit eine Filtereinheit (1540) umfasst, die dazu ausgelegt ist, zumindest eine aus einer Warnungsfensterüberprüfungsoperation, einer Fehlerbehebungsinformationsanzeigeoperation und einer manuellen Anzeigeoperation aus den Inhalten der Operationen, die in der erfassten Operationshistorie umfasst sind, auszuschließen.

2. Operationsanzeigesystem nach Anspruch 1, wobei die Erzeugungseinheit dazu ausgelegt ist, eine Operation zum Ausgeben einer Anweisung zum Steuern des Steuerziels aus den Inhalten der Operationen, die in der Operationshistorie umfasst sind, zu extrahieren.

3. Operationsanzeigesystem nach Anspruch 1 oder 2, wobei die Erzeugungseinheit dazu ausgelegt ist, eine Benutzeroperation zum Seitenübergang aus den Inhalten der Operationen, die in der Operationshistorie umfasst sind, auszuschließen.

4. Operationsanzeigesystem nach einem der Ansprüche 1 bis 3, wobei die Erzeugungseinheit dazu ausgelegt ist, eine neue Seite (140) zu erzeugen, welche das eine oder die mehreren zweiten Operationsobjekte umfasst.

5. Operationsanzeigesystem nach einem der Ansprüche 1 bis 4, wobei die Anzeigeeinheit dazu ausgelegt ist, eine Seite anzuzeigen, die kein anderes Operationsobjekt als das eine oder die mehreren zweiten Operationsobjekte umfasst.

6. Operationsanzeigesystem nach einem der Ansprüche 1 bis 5, wobei jedes aus dem einen oder den mehreren zweiten Operationsobjekten (142A) eine Kopie eines entsprechenden ersten Operationsobjekts ist.

7. Operationsanzeigesystem nach einem der Ansprüche 1 bis 5, wobei jedes aus dem einen oder den mehreren zweiten Operationsobjekten (142B) eine Anweisung zum Zugreifen auf ein entsprechendes erstes Operationsobjekt umfasst.

8. Operationsanzeigesystem nach einem der Ansprüche 1 bis 7, wobei die Erfassungseinheit dazu ausgelegt ist, als Reaktion auf das Empfangen einer vorbestimmten spezifischen Benutzeroperation (144) zu beginnen, die Operationshistorie zu erfassen.

9. Informationsverarbeitungsverfahren in einem Steuersystem (1) zum Steuern eines Steuerziels, wobei das Informationsverarbeitungsverfahren Folgendes umfasst:
Steuern einer Anzeigeeinheit (128), um eine ausgewählte Seite aus einer oder mehreren Seiten (130), die vorab erstellt wurden, anzuzeigen, wobei jede aus den Seiten ein oder mehrere Operationsobjekte (132) umfasst, die jeweils dem Anweisen einer vorbestimmten Verarbeitung dienen;
Erfassen (S6, S8) einer Operationshistorie (170), die ein oder mehrere Inhalte von einer oder mehreren Operationen an dem einen oder den mehreren ersten Operationsobjekten umfasst;
Extrahieren (S10) von einem oder mehreren Operationen, die jeweils mit einer vorbestimmten Regel in der erfassten Operationshistorie übereinstimmen; und
Erzeugen (S12) von einem oder mehreren zweiten Operationsobjekten (142), die jeweils dem Anweisen der gleichen Verarbeitung wie die Verarbeitung eines entsprechenden aus dem einen oder den mehreren ersten Operationsobjekten dienen, die durch einen Benutzer angewandt werden, basierend auf der/den extrahierten einen oder mehreren Operationen, wobei das Verfahren **dadurch gekennzeichnet ist, dass** es ferner Folgendes umfasst:
das Extrahieren der einen oder der mehreren Operationen das Ausschließen zumindest einer aus einer Warnungsfensterüberprüfungsoperation, einer Fehlerbehebungsinformationsanzeigeoperation und einer manuellen Anzeigeoperation aus den Inhalten der Operationen, die in der erfassten Operationshistorie umfasst sind.

10. Informationsverarbeitungsverfahren nach Anspruch 9, wobei das Extrahieren der einen oder der mehreren Operationen ferner das Extrahieren einer Operation zum Ausgeben einer Anweisung zum Steuern des Steuerziels aus den Inhalten der Operationen, die in der Operationshistorie umfasst sind, umfasst.

11. Informationsverarbeitungsverfahren nach einem der Ansprüche 9 oder 10, wobei das Extrahieren der einen oder der mehreren Operationen ferner das Ausschließen einer Benutzeroperation zum Seitenübergang aus den Inhalten der Operationen, die in der erfassten Operationshistorie umfasst sind, umfasst.

12. Informationsverarbeitungsprogramm (112), das durch einen Computer (100) auszuführen ist, der zumindest einen Teil eines Steuersystems (1) zum Steuern eines Steuerziels bildet, wobei das Informationsverarbeitungsprogramm bewirkt, dass der Computer Folgendes durchführt:
Steuern einer Anzeigeeinheit (128), um eine ausgewählte Seite aus einer oder mehreren Seiten (130), die vorab erstellt wurden, anzuzeigen, wobei jede aus den Seiten ein oder mehrere Operationsobjekte (132) umfasst, die jeweils dem Anweisen einer vorbestimmten Verarbeitung dienen;
Erfassen (S6, S8) einer Operationshistorie (170), die einen oder mehrere Inhalte von der einen oder den mehreren Operationen an dem einen oder den mehreren ersten Operationsobjekten umfasst;
Extrahieren (S10) von einer oder mehreren Operationen, die jeweils mit einer vorbestimmten Regel in der erfassten Operationshistorie übereinstimmen; und
Erzeugen (S12) von einem oder mehreren zweiten Operationsobjekten (142), die jeweils dem Anweisen der gleichen Verarbeitung wie die Verarbeitung eines entsprechenden aus dem einen oder den mehreren ersten Operationsobjekten dienen, betrieben durch einen Benutzer basierend auf der/den extrahierten einen oder mehreren Objekten, wobei das Programm **dadurch gekennzeichnet ist, dass** es bewirkt, dass der Computer ferner Folgendes durchführt:
das Extrahieren der einen oder der mehreren Operationen das Ausschließen zumindest einer aus einer Warnungsfensterüberprüfungsoperation, einer Fehlerbehebungsinformationsanzeigeoperation und einer manuellen Anzeigeoperation aus den Inhalten der Operationen, die in der erfassten Operationshistorie umfasst sind.

13. Informationsverarbeitungsprogramm nach Anspruch 12, wobei das Extrahieren der einen oder der mehreren Operationen ferner das Extrahieren einer Operation zum Ausgeben einer Anweisung zum Steuern des Steuerziels aus den Inhalten der Operationen, die in der erfassten Operationshistorie umfasst sind, umfasst.

14. Informationsverarbeitungsprogramm nach einem der Ansprüche 12 oder 13, wobei das Extrahieren der einen oder der mehreren Operationen ferner das Ausschließen einer Benutzeroperation zum Seitenübergang aus den Inhalten der Operationen, die in der erfassten Operationshistorie umfasst sind, umfasst.

## Revendications

1. Système d'affichage d'opération (100) qui constitue au moins une partie d'un système de commande (1) pour commander une cible de commande, le système d'affichage d'opération (100) comprenant :
une unité d'affichage (128) ;
une unité d'entrée (126) configurée pour recevoir une opération d'utilisateur ;
une unité de commande (152) configurée pour commander l'unité d'affichage pour afficher une page sélectionnée d'une ou plusieurs pages (130) préparées à l'avance, chacune des pages incluant un ou plusieurs premiers objets d'opération (132) chacun pour ordonner un traitement prédéterminé ;
une unité d'acquisition (150) configurée pour acquérir un historique d'opérations (170) incluant un ou plusieurs contenus d'une ou plusieurs opérations sur les un ou plusieurs premiers objets d'opération ; et
une unité de génération (154) configurée pour extraire une ou plusieurs opérations correspondant chacune à une course prédéterminée dans l'historique d'opérations acquis et générer, sur la base des une ou plusieurs opérations extraites, un ou plusieurs seconds objets d'opération (142) pour ordonner chacun le même traitement que le traitement d'un certain correspondant des un ou plusieurs premiers objets d'opération exploités par un utilisateur, le système étant **caractérisé en ce que** :
l'unité de génération comprend une unité de filtrage (1540) configurée pour exclure au moins une parmi une opération de vérification de visionneur d'alarme, une opération d'affichage d'informations de dépannage et une opération d'affichage manuel parmi les contenus des opérations incluses dans l'historique d'opérations acquis.

2. Système d'affichage d'opération selon la revendication 1, dans lequel l'unité de génération est configurée pour extraire une opération afin de délivrer en sortie une instruction pour commander la cible de commande, parmi le contenu des opérations incluses dans l'historique d'opérations.

3. Système d'affichage d'opération selon la revendication 1 ou 2, dans lequel l'unité de génération est configurée pour exclure une opération d'utilisateur pour une transition de page parmi les contenus des opérations incluses dans l'historique d'opérations.

4. Système d'affichage d'opération selon l'une quelconque des revendications 1 à 3, dans lequel l'unité de génération est configurée pour générer une nouvelle page (140) incluant les un ou plusieurs seconds objets d'opération.

5. Système d'affichage d'opération selon l'une quelconque des revendications 1 à 4, dans lequel l'unité d'affichage est configurée pour afficher une page qui n'inclut pas un objet d'opération autre que les un ou plusieurs seconds objets d'opération.

6. Système d'affichage d'opération selon l'une quelconque des revendications 1 à 5, dans lequel chacun des un ou plusieurs seconds objets d'opération (142A) est une copie d'un premier objet d'opération correspondant.

7. Système d'affichage d'opération selon l'une quelconque des revendications 1 à 5, dans lequel chacun des un ou plusieurs seconds objets d'opération (142B) inclut une instruction pour accéder à un premier objet d'opération correspondant.

8. Système d'affichage d'opération selon l'une quelconque des revendications 1 à 7, dans lequel l'unité d'acquisition est configurée pour commencer à acquérir l'historique d'opérations en réponse à la réception d'une opération d'utilisateur spécifique prédéterminée (144).

9. Procédé de traitement d'informations dans un système de commande (1) pour commander une cible de commande, le procédé de traitement d'informations comprenant les étapes consistant à :
commander une unité d'affichage (128) pour afficher une page sélectionnée parmi une ou plusieurs pages (130) préparées à l'avance, chacune des pages incluant un ou plusieurs premiers objets d'opération (132), chacun pour ordonner un traitement prédéterminé ;
acquérir (S6, S8) un historique d'opérations (170) incluant un ou plusieurs contenus d'une ou plusieurs opérations sur les un ou plusieurs premiers objets d'opération ;
extraire (S10) une ou plusieurs opérations correspondant chacune à une course prédéterminée dans l'historique d'opérations acquis ; et
générer (S12), sur la base des une ou plusieurs opérations extraites, un ou plusieurs seconds objets d'opération (142), chacun pour ordonner le même traitement que le traitement d'un objet correspondant parmi les un ou plusieurs premiers objets d'opération exploités par un utilisateur,
le procédé étant **caractérisé en ce qu'**il comprend en outre :
l'extraction des une ou plusieurs opérations qui comprend l'exclusion d'au moins une parmi une opération de vérification de visionneur d'alarme, une opération d'affichage d'informations de dépannage et une opération d'affichage manuel parmi les contenus des opérations incluses dans l'historique d'opérations acquis.

10. Procédé de traitement d'informations selon la revendication 9, dans lequel l'extraction des une ou plusieurs opérations comprend en outre une extraction d'une opération pour délivrer en sortie une instruction pour commander la cible de commande, parmi les contenus des opérations incluses dans l'historique d'opérations.

11. Procédé de traitement d'informations selon la revendication 9 ou 10, dans lequel l'extraction des une ou plusieurs opérations comprend en outre une exclusion d'une opération d'utilisateur pour une transition de page parmi les contenus des opérations incluses dans l'historique d'opérations.

12. Programme de traitement d'informations (112) à exécuter par un ordinateur (100) qui constitue au moins une partie d'un système de commande (1) pour commander une cible de commande, le programme de traitement d'informations amenant l'ordinateur à effectuer les étapes consistant à :
commander une unité d'affichage (128) pour afficher une page sélectionnée parmi une ou plusieurs pages (130) préparées à l'avance, chacune des pages incluant un ou plusieurs premiers objets d'opération (132), chacun pour ordonner un traitement prédéterminé ;
acquérir (S6, S8) un historique d'opérations (170) incluant un ou plusieurs contenus d'une ou plusieurs opérations sur les un ou plusieurs premiers objets d'opération ;
extraire (S10) une ou plusieurs opérations correspondant chacune à une course prédéterminée dans l'historique d'opérations acquis ; et
générer (S12), sur la base des une ou plusieurs opérations extraites, un ou plusieurs seconds objets d'opération (142), chacun pour ordonner le même traitement que le traitement d'un certain correspondant parmi les un ou plusieurs premiers objets d'opération exploités par un utilisateur, le programme étant **caractérisé en ce qu'**il amène l'ordinateur à effectuer en outre :
l'extraction des une ou plusieurs opérations qui comprend l'exclusion d'au moins une parmi une opération de vérification de visionneur d'alarme, une opération de diffusion d'informations de dépannage et une opération d'affichage manuel parmi les contenus des opérations incluses dans l'historique d'opérations acquis.

13. Programme de traitement d'informations selon la revendication 12, dans lequel l'extraction des une ou plusieurs opérations comprend en outre une extraction d'une opération pour délivrer en sortie une instruction pour commander la cible de commande, parmi les contenus des opérations incluses dans l'historique d'opérations.

14. Programme de traitement d'informations selon la revendication 12 ou 13, dans lequel l'extraction des une ou plusieurs opérations comprend en outre une exclusion d'une opération d'utilisateur pour une transition de page parmi les contenus des opérations incluses dans l'historique d'opérations.
